# EUROPÄISCHE PATENTSCHRIFT

(11) **EP 1 722 462 B1**
(45) Veröffentlichungstag und Bekanntmachung des Hinweises auf die Patenterteilung: **05.11.2008**
(21) Anmeldenummer: 05010167.4
(22) Anmeldetag: 10.05.2005
(51) Int. Cl.: H02K 9/06, H02K 1/30, H02K 1/32, H02K 11/04

(54) **Elektrische Maschine**
Electric machine
Machine électrique

(43) Veröffentlichungstag der Anmeldung: 15.11.2006
(73) Patentinhaber: SIEMENS AKTIENGESELLSCHAFT, 80333 München (DE)
(72) Erfinder: De Filippis, Pietro, 20124 Milano (IT); Kemmer, Detlef, 97237 Altertheim (DE); Redelberger, Harald, 97273 Kürnach (DE); Schulz, Hermann, 97355 Kleinlangheim (DE)

(56) Entgegenhaltungen:
- EP-A- 1 333 561
- DE-A1- 3 145 558
- DE-A1- 10 044 066
- GB-A- 372 899
- US-B1- 6 278 207
- PATENT ABSTRACTS OF JAPAN Bd. 2003, Nr. 04, 2. April 2003 (2003-04-02) -& JP 2002 354752 A (FUJITSU GENERAL LTD), 6. Dezember 2002 (2002-12-06)
- PATENT ABSTRACTS OF JAPAN Bd. 008, Nr. 155 (E-256), 19. Juli 1984 (1984-07-19) -& JP 59 059043 A (TOSHIBA KK), 4. April 1984 (1984-04-04)
- PATENT ABSTRACTS OF JAPAN Bd. 2003, Nr. 12, 5. Dezember 2003 (2003-12-05) -& JP 2005 086967 A (MATSUSHITA ELECTRIC IND CO LTD), 31. März 2005 (2005-03-31)

## Beschreibung

Die Erfindung betrifft eine elektrische Maschine mit einem Läufer und einem Ständer. Darüber hinaus betrifft die Erfindung eine Gebläseeinheit, insbesondere für ein Kraftfahrzeug.

Elektrische Maschinen mit einem Läufer und einem Ständer können zum einen als Generatoren zur Stromerzeugung und zum anderen als Antriebsmotoren verwendet werden. Für einen sicheren Betrieb dieser Maschinen ist es erforderlich, eine Überhitzung zu vermeiden, die zu einer Verringerung der Lebensdauer oder zu einem Totalausfall der Maschine führen kann. Insbesondere die Elektronikbaugruppen moderner Elektromotoren stellen dabei die aus thermischer Sicht kritischen Komponenten dar und erhöhen damit die Kühlungsanforderungen. Um die erzeugten Verlustleistungen abzuführen und den Gesamtwärmehaushalt einer solchen Maschine zu regeln, ist eine Vielzahl von Lösungsansätzen bekannt, so u.a. die Verwendung von speziellen Kühlkörpern oder der Einsatz einer Wasserkühlung. Weiterhin bekannt ist die Verwendung von A-seitig oder B-seitig angeordneten Zusatzlüftern, die eine deutliche Bauraumverlängerung zur Folge haben.

Die europäische Patentanmeldung der Anmelderin mit der Anmeldenummer 04 000 739.5-2207 zeigt eine elektrische Maschine, bei der der Rotor wenigstens einen Durchlüftungskanal aufweist, dem ein Luftleitelement zugeordnet ist, welches die ausreichende Zufuhr von sich im Motorinneren befindenden Luft zu dem Durchlüftungskanal sicherstellt, während sich der Rotor bewegt. Die europäische Patentanmeldung mit der Veröffentlichungsnummer 0 649 211 A2 beschreibt eine Asynchronmaschine, deren Rotor beidseitig Schaufelelemente zur Erzeugung eines Kühlluftstromes aufweist. Nachteilig bei den bekannten Lösungen ist es, das die Positionierung von Durchlüftungskanälen oder dergleichen stets in Abhängigkeit von konstruktiven oder funktionalen Zwängen erfolgt und dabei Funktionsnachteile nicht völlig ausgeschlossen werden können.

In der JP 2002 354752 A ist ein Motor beschrieben, in dessen einstückig mit einem Kunststoffmagneten ausgebildeten Innenläufer eine Öffnung zur Kühlzwecken vorgesehen ist. In der DE 31 45 558 ist eine Wechselstromlichtmaschine mit einem Außenläufer beschrieben. Durch eine Hohlwelle des Außenläufers wird mit Hilfe eines Kühlers Kühlluft bewegt. In der GB 372 899 A sowie in der JP 59 059043 A sind Elektromotoren ohne permanentmagneterregte Läufer beschrieben, die eine oder mehrere Lüftungsöffnungen im Läuferinneren aufweisen. In der EP 1 333 561 A2 ist ein Motor beschrieben, dessen permanenterregter Innenläufer eine Kühlluftöffnung und einen Lüfter aufweist.

Eine Aufgabe der vorliegenden Erfindung ist es, die Kühlung einer elektrischen Maschine zu verbessern. Diese Aufgabe wird durch eine elektrische Maschine beziehungsweise durch eine Gebläseeinheit gemäß der unabhängigen Patentansprüche gelöst.

Die Erfindung basiert auf dem Grundgedanken, die Drehbewegung eines permanenterregten Läufers zur Erzeugung eines Kühlluftstromes in der elektrischen Maschine zu nutzen. Hierzu weist der Läufer wenigsten eine Öffnung auf zur Ausbildung eines Luftströmungsweges durch den Läufer. Erfindungsgemäß ist die wenigstens eine Öffnung in einem Bereich des Läufers angeordnet, der magnetisch nicht wirksam ist. Hierzu werden die benötigten Magnete, vorzugsweise in Form sogenannter Taschenmagnete, auf der Umfangslinie des Läufers angeordnet derart, dass sich ein magnetisch nicht wirksamer Bereich um das Zentrum des Läufers ergibt. Die Ausmaße der wenigstens einen Öffnung entspricht vorteilhafterweise dem gesamten magnetisch nicht wirksamen Bereich des Läufers. Aufgrund des durch die Öffnung fehlenden Läufermaterials ergibt sich so eine zum Teil erhebliche Gewichtsverringerung des Läufers bei gleicher Leistung der elektrischen Maschine. Die erfindungsgemäße Gewichtsreduzierung ermöglicht die Bereitstellung von sehr leichten Elektromotoren. Besonders vorteilhaft ist es, wenn der Luftströmungsweg durch den Läufer im wesentlichen in Axialrichtung, also parallel zur Läuferachse, verläuft, so dass die auf der Rückseite der elektrischen Maschine eintretende Luft in Richtung auf die Vorderseite der elektrischen Maschine zu durch den Läufer hindurch treten kann. Dies wird dadurch erreicht, dass die wenigstens eine Öffnung im Läufer im wesentlichen in Axialrichtung verläuft.

Zur Bewegung der durch den Läufer strömenden Luft ist ein Lüfter vorgesehen, welcher sich mit dem Läufer mitbewegt. Der Lüfter saugt die ihn umgebende Luft an einer Seite an und stößt sie an der anderen Seite aus. Hierdurch wird ein zwangsweise geführter Kühlluftstrom durch den Läufer erzeugt. Der Kühlluftstrom durch den Läufer trägt mit anderen Worten zum Gesamtluftstrom in der elektrischen Maschine bei, so dass sich eine gegenüber herkömmlichen Bauformen verbesserte Kühlung der elektrischen Maschine ergibt. Die verbesserte Kühlung erlaubt bei gleicher Leistung der Maschine die Verwendung eines geringeren Bauraumes beziehungsweise bei gleichem Bauraum eine erhöhte Leistung. Zugleich werden Ausfälle der elektrischen Maschine aufgrund einer Überhitzung vermieden, wodurch eine hohe Betriebsdauer gewährleistet wird. Die Verwendung spezieller Kühlkörper oder der Einsatz einer Wasserkühlung bzw. anderer aufwendiger Techniken sind nicht erforderlich.

Durch den sich mit dem Läufer mitbewegenden Lüfter wird ein die Kühlung der Maschine unterstützender Luftstrom erzielt, ohne dass dafür sich unabhängig von dem Läufer bewegende Bauteile erforderlich sind. Die erforderliche Kühlung lässt sich daher auf vergleichsweise einfache Art und Weise und somit besonders preiswert bereitstellen. Die Erfindung zeichnet sich insbesondere dadurch aus, dass die zusätzliche Kühlung nur mit einer unwesentlichen oder sogar ohne eine Verlängerung des benötigten Bauraums möglich ist.

Die elektrische Maschine ist dabei derart ausgestaltet, dass sich im Betrieb eine ständige Luftströmung zwischen einer Elektronikkomponente der Maschine und dem Läufer ausbildet. Da Elektronikkomponenten in modernen elektrischen Maschinen mitunter sehr deutlich zur Erwärmung der Maschine beitragen, kann durch die Ausbildung einer solchen Luftströmung, die auch nach Art eines Luftfilms und somit als eine Art thermische Isolationsschicht ausgebildet sein kann, maßgeblich zur Kühlung der elektrischen Maschine beitragen. Darüber hinaus kann durch die Luftschicht zwischen Motorteil und Elektronikkomponente eine Wärmeübergang von dem Motorteil auf die Elektronikkomponente, welche die thermisch kritischeren Elemente der Maschine umfasst, verhindert werden.

Hierzu weist die elektrische Maschine ein Maschinenrückgehäuseteil mit wenigstens einer Lufteintrittsöffnung auf. Die wenigstens eine Lufteintrittsöffnung ist derart angeordnet, dass den verschiedenen Luftströmen durch die Maschine möglichst wenig Widerstand entgegengesetzt wird. Die wenigstens eine Lufteintrittsöffnung ist darüber hinaus zu der wenigstens einen Öffnung des Läufers derart angeordnet, dass die den Läufer durchströmende Luft zuvor an der Elektronikkomponente entlang geführt wird. Ist die Elektronikkomponente in oder an dem Maschinenrückgehäuseteil angebracht, so ist, um der Elektronikkomponente einen Kühlluftstrom zuzuführen oder den Kühlluftstrom an dieser Elektronikkomponente entlang zu führen, die wenigstens eine Lufteintrittsöffnung vorzugsweise in einem äußeren Bereich des Maschinenrückgehäuseteils vorgesehen.

Aufgrund der durch den Lüfter erzeugten Luftbewegung erfolgt eine Strömung der Kühlluft von der Lufteintrittsöffnung über die Elektronikkomponente in Richtung der mittig im Läufer vorgesehenen Öffnung, wobei Wärme von der Elektronikkomponente mitgenommen wird. Nach dem Durchströmen des Läufers wird die Kühlluft vorzugsweise durch wenigstens eine Luftaustrittsöffnung in einem Maschinenfrontgehäuseteil wieder an die Umgebung abgegeben. Das Maschinenrückgehäuseteil und/oder das Maschinenfrontgehäuseteil sind vorzugsweise als Lagerschalen für die Läuferwelle ausgebildet, so dass ein einfacher Aufbau möglich ist.

Die Erfindung ist bei einer Vielzahl von elektrischen Maschinen einsetzbar. Besonders vorteilhaft ist jedoch der Einsatz der Erfindung bei Elektromotoren zum Antrieb eines Kühlerlüfter in einem Kraftfahrzeug.

Vorteilhafte Ausgestaltungen der Erfindung sind in den Unteransprüchen beschrieben.

Als besonders vorteilhaft hat es sich erwiesen, dass eine einzige Öffnung derart vorgesehen ist, dass der Läufer im wesentlichen die Form eines Hohlzylinders aufweist. Zur Befestigung der Läuferwelle dient dann vorzugsweise ein im verbleibenden Läufer-"Ring" zentral angeordnetes Befestigungselement, welches mit dem Läufer-"Ring" über Verstrebungen oder dergleichen verbunden ist. Anders ausgedrückt weist der Läufer in dieser Ausführungsform eine einzige, zentrale Öffnung auf, in deren Mitte sich das Befestigungselement für die Läuferwelle befindet. Der Läufer-"Ring" und die speichenartig in der Öffnung angeordneten Verstrebungen sind vorzugsweise aus dem Läuferpaket ausgestanzt und bestehen daher ebenfalls aus dem Blechmaterial des Läuferpakets.

Um eine Mitbewegung des Lüfters mit dem Läufer zu ermöglichen ist der Lüfter vorzugsweise mit der Läuferwelle und/oder dem Läufer selbst verbunden. Ganz besonders vorteilhaft ist es, wenn Lüfter und Läufer eine Baueinheit bilden. Durch eine solche integrale Bauart lässt sich der Herstellungs- und Montageaufwand deutlich verringern. Eine solche Läufer-Lüfter-Kombination wird vorzugsweise durch ein Umspritzen des eigentlichen Läufers mit einem Kunststoffmaterial hergestellt. Dabei werden vorzugsweise zugleich der Läufer-"Ring" und die Verstrebungen mitumspritzt.

In einer weiteren vorteilhaften Ausführungsform der Erfindung ist der Lüfter als Radiallüfter ausgebildet. Dies bedeutet, dass die Kühlluft axial, also parallel zur Läuferachse angesaugt und durch die Drehung des Lüfters um 90 Grad umgelenkt und radial abgegeben wird.

Eine besonders gute Kühlung der elektrischen Maschine wird dadurch erreicht, dass die elektrische Maschine derart ausgebildet ist, dass ein zweiter, an den Wicklungen des Ständers entlang führender Luftströmungsweg gebildet wird. Werden beide Luftströmungswege zur Kühlung der elektrischen Maschine genutzt, so ist es vorteilhaft, wenn der Lüfter derart ausgebildet ist, dass sich die Luftströme durch Läufer und Ständer möglichst wenig beeinflussen. Insbesondere wird dies dadurch ermöglicht, dass der Lüfter als Radial-Axial-Lüfter ausgebildet ist. Dabei wird die angesaugte Kühlluft von dem Lüfter nicht mehr radial abgegeben, wo sie direkt auf die von den Wicklungen abgegebene Kühlluft treffen und zu unerwünschten Turbulenzen führen könnte. Vielmehr wird durch eine Umlenkung der Luft die Ausströmrichtung in eine axiale oder axial-nahe Richtung geändert. Die Umlenkung erfolgt vorzugsweise durch eine entsprechende Ausformung des Lüfterrades oder durch Luftleitbleche am Umfang des Lüfterrades.

Die Kühlung der elektrischen Maschine kann weiter verbessert werden, wenn an wenigstens einem Gehäuseteil drehrichtungsabhängig ausgebildete Kühlelemente vorgesehen sind. Die vorzugsweise an dem Maschinenrückgehäuseteil angeordneten Kühlelemente dienen zur nochmaligen Abgabe von Wärme an die Kühlluft, insbesondere nach dem Austreten der Kühlluft aus der elektrischen Maschine. Eine im Vergleich zu herkömmlichen Kühlelementen verbesserte Wärmeabgabe an die Kühlluft wird durch eine drehrichtungsabhängige Formgebung der Kühlelemente, insbesondere in Form von Luftleitschaufeln, ermöglicht.

Die vorliegende Erfindung wird nachfolgend anhand eines Ausführungsbeispieles beschrieben, das mit Hilfe von Zeichnungen näher erläutert wird. Hierbei zeigen:
- FIG 1: die Rückseite eines offenen Läufers mit Lüfter,
- FIG 2: die Vorderseite des offenen Läufers aus FIG 1,
- FIG 3: eine schematische Darstellung des magnetischen Flusses in dem Läufer aus FIG 1,
- FIG 4: ein rückseitiges Lagerschild eines Elektromotors,
- FIG 5: der offene Läufer aus FIG 1 montiert an dem rückseitigen Lagerschild aus FIG 4,
- FIG 6: ein Elektromotor mit offenem Läufer und montiertem vorderen Lagerschild,
- FIG 7: ein Querschnitt durch den Elektromotor aus FIG 6,
- FIG 8: ein offener Läufer mit Radial-Axial-Lüfter,
- FIG 9: ein offener Läufer mit Radiallüfter,
- FIG 10: eine weitere Ausführungsform eines offenen Läufers mit Axiallüfter.

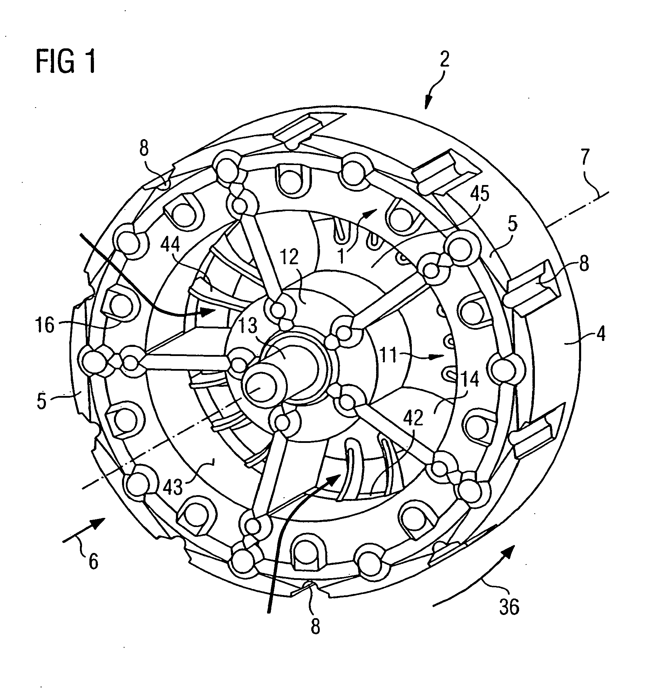

FIG 1 zeigt eine perspektivische Ansicht auf die Rückseite 1 eines erfindungsgemäßen Läufers 2. Bei dem Läufer 2 handelt es sich um einen permanent erregten Innenläufer eines bürstenlosen elektromagnetischen Gleichstrommotors, wie er insbesondere als Kühlerlüftermotor in Kraftfahrzeugen eingesetzt wird.

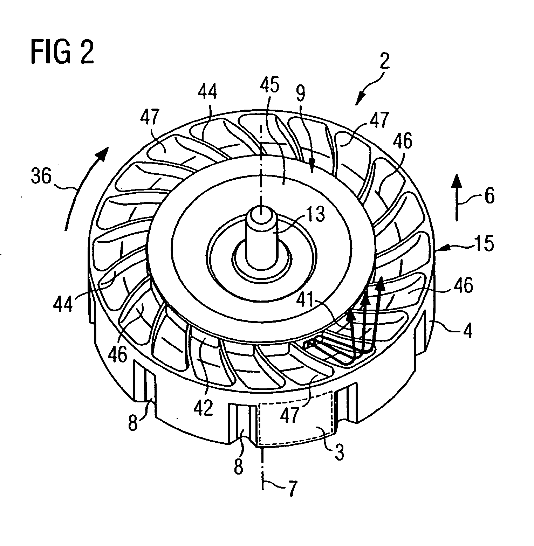

Der Läufer 2 weist so genannte Taschenmagneten 3 auf (in Fig 2 mitdurchbrochenen Linien angedeutet). Die Magnete 3 sind voneinander beabstandet am Umfang 4 des Läufers 2 angeordnet. Bei den Magneten 3 handelt es sich um Seltene-Erden-Magnete, beispielsweise auf NdFeB-Basis. Die Magnete 3 liegen in_Taschen 5 ein, die am Umfang 4 des Läufers in das Eisen eingeformt sind. Zum Schutz vor Oxidation sind die Magnete 3 mit einem Kunststoffmaterial umspritzt. Ein Vorteil von derart in Eisen eingebetteten Magneten ist es, dass sich die Magnete auch bei hohen Strömen nur schlecht entmagnetisieren lassen. Zwischen den die Magnete 3 aufnehmenden Taschen 5 sind am Umfang 4 des Läufers 2 in Axialrichtung 6, also parallel zur Drehachse 7 des Läufers 2 angeordnete Nuten 8 eingebracht, die sich von der Rückseite 1 des Läufers 2 in Richtung Vorderseite 9 des Läufers 2 erstrecken. Die Nuten 8 sind nicht durchgängig ausgeführt, sondern entsprechen in ihrer Länge der Länge der Taschen 5. Die Nuten 8 dienen u.a. dazu, bei der Magnetisierung der Magnete 3 stromdurchflossene Leiter aufzunehmen und somit einen möglichst geringen Abstand von den Leitern zu den Magneten 3 und damit ein möglichst hohes Magnetisierungsfeld zu ermöglichen. Eine nachträgliche Magnetisierung der Magnete 3 ist aufgrund der Umspritzung des Läufers 2 mit Kunststoffmaterial immer dann sinnvoll, wenn bereits vormagnetisierte Magneten bei mit dem Umspritzprozess verbundenen Temperaturen einen Teil ihres Flusses verlieren würden.

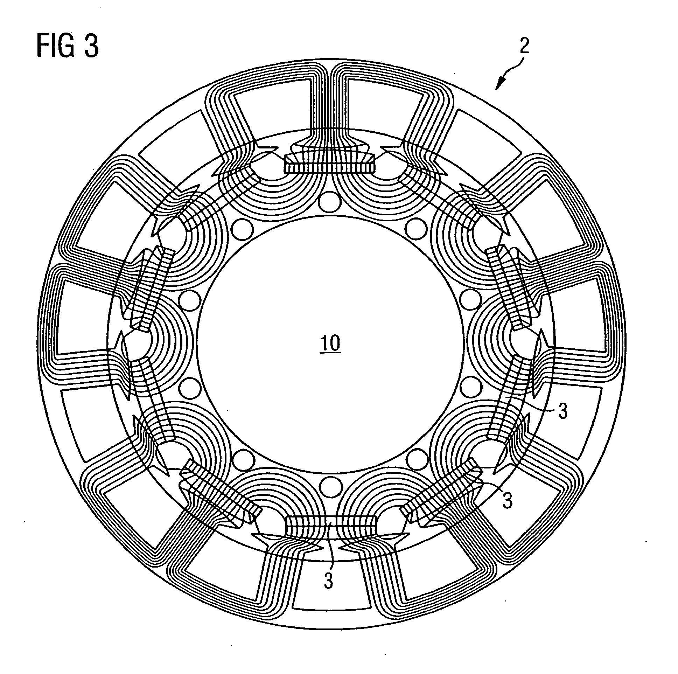

Zudem ergibt sich durch diese Anordnung der Magnete 3 ein magnetisch nicht wirksamer Bereich 10 im Inneren des Läufers 2, vgl. FIG 3. Der Magnetfluss ist mit anderen Worten in diesem Bereich vernachlässigbar klein oder nicht vorhanden; jedenfalls für einen ordnungsgemäßen Betrieb des Elektromotors nicht zwingend erforderlich. Erfindungsgemäß ist der gesamte magnetisch nicht wirksame Innenbereich 10 des Läufers 2 entfernt worden, so dass der Läufer 2 die Form eines Hohlzylinders aufweist. Die sich dadurch ergebende zentrale Öffnung 11 des Läufers 2 erstreckt sich von der Rückseite 1 des Läufers 2 zu der Vorderseite 9 des Läufers 2 in axialer Richtung 6. In der Mitte der Öffnung 11 ist ein zentrales Befestigungselement 12 für die Läuferwelle 13 vorgesehen. Das Befestigungselement 12 ist mit dem Läufer 2 über fünf sternförmig angeordnete Verbindungsstege 14 verbunden, die aus dem stanzpaketierten Läuferblech besteht.

Durch das Entfernen des Eisens aus dem Inneren 10 des Läufers 2 reduziert sich dessen Gewicht deutlich. Zur Fixierung wird die Läuferwelle 13 in das Befestigungselement eingepresst.

An der Vorderseite 9 des Läufers 2 ist ein Lüfter 15 aus Kunststoffmaterial vorgesehen. Erfindungsgemäß wird der Lüfter 15 dadurch hergestellt, dass der gesamte Läufer 2 mit Kunststoffmaterial umspritzt wird. Dadurch werden nicht nur die Magnete 3, sondern auch das Paket vor Feuchtigkeit und Umwelteinflüssen geschützt. Der Lüfter 15 wird an den Läufer 2 vorzugsweise in einem einzigen Umspritzungs-Arbeitgang angespritzt. Lüfter 15 und Läufer 2 bilden mit anderen Worten eine integrale Einheit, vgl. auch FIG 2, in der diese Läufer-Lüfter-Einheit schräg von oben dargestellt ist. Die Herstellung dieser Baueinheit ist dabei vergleichsweise einfach und preiswert.

Bei einer Verwendung eines Elektromotors als Antrieb für einen Kühlerlüfter für ein Kraftfahrzeug entsteht bereits durch den Druckunterschied zwischen der Rückseite des Elektromotors und seiner Abtriebsseite ein Luftstrom durch den Antrieb. Dieser Luftstrom wird durch den Einsatz der Erfindung noch einmal verstärkt. Selbstverständlich ist der Einsatz der Erfindung jedoch nicht auf Kühlerlüftermotoren beschränkt.

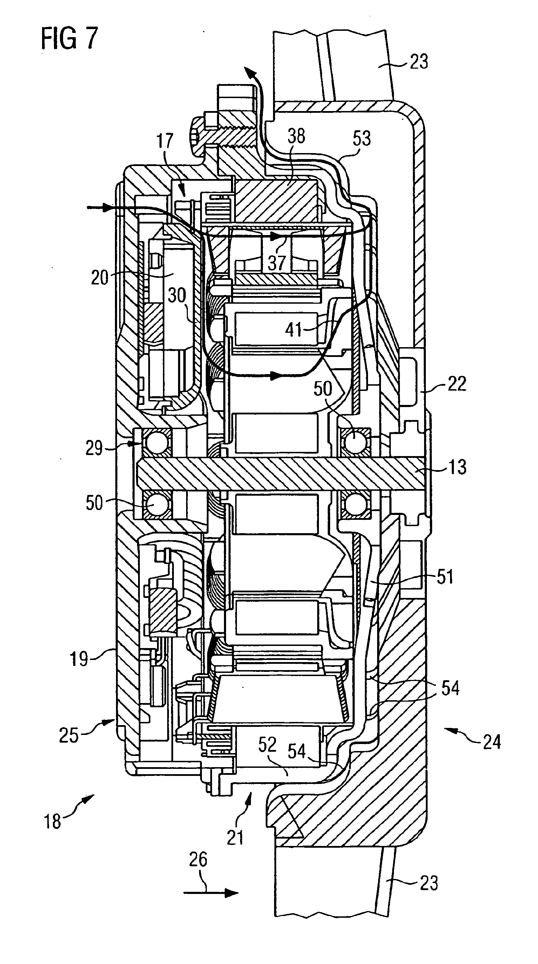

Das den Motorinnenraum 17 umschließende Motorgehäuse des Elektromotors 18 besteht im wesentlichen aus einem rückseitigen Lagerdeckel 19 mit integrierter Motorelektronik 20 und einem mit dem Lagerdeckel 19 verbundenen abtriebsseitigen Gehäusedeckel 21, vgl. FIG 7. Sämtliche Motorgehäuseteile sind als Aluminiumdruckgussteile ausgeführt. Die Verwendung von Druckgussteilen erlaubt eine verhältnismäßig komplizierte Gehäusegeometrie zur Kühlungsoptimierung, wie sie bei der Verwendung von herkömmlichen Stanzbiegeteilen oder tiefgezogenen Stahlgehäusen nicht möglich sind.

Auf den abtriebsseitigen Gehäusedeckel 21 ist eine Lüfternabe 22 mit Lüfterblättern 23 aufgesetzt. Die rotierenden Lüfterblätter 23 erzeugen beim Betrieb des Kühlerlüfters einen Druckunterschied zwischen der Vorderseite 24 und der Rückseite 25 des Elektromotors 18, so dass ein in Strömungsrichtung 26 verlaufender Luftstrom entsteht. Dieser Luftstrom wird als Kühlluftstrom am Motorgehäuse entlang geführt, um Verlustwärme abzuführen und damit den Elektromotor 18 zu kühlen. Im Gegensatz zu einem Elektromotor mit Außenläufer, bei dem die Wicklung und das verlusterzeugende Eisen innen angeordnet sind, wird bei dem verwendeten Innenläufer 2, bei dem die Wicklung und das verlusterzeugende Eisen außen angeordnet sind, die Abwärme zu einem großen Teil direkt an das Motorgehäuse abgeführt, so dass durch die Umströmung des Motorgehäuses bereits ein Teil der Abwärme abgeführt und der Motor 18 damit gekühlt werden kann.

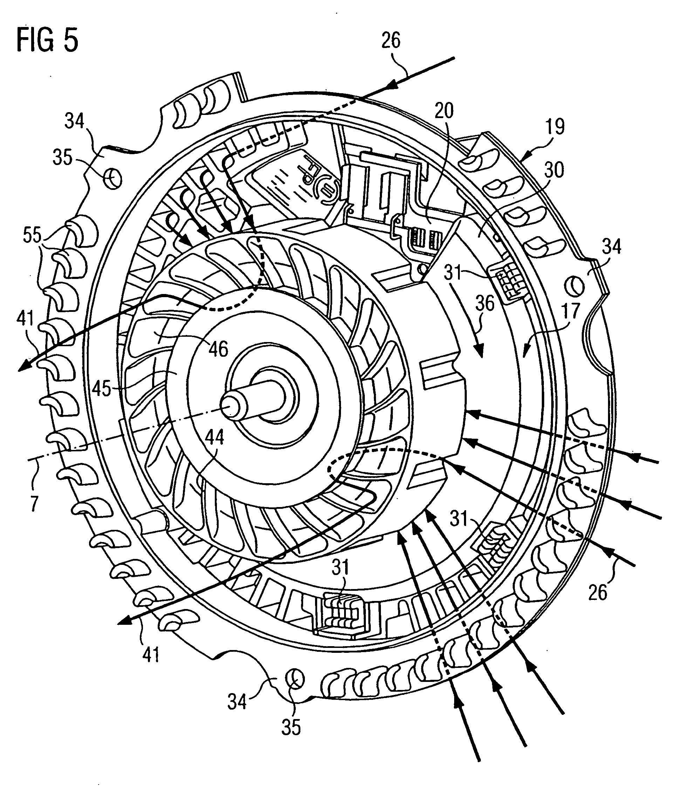

Der rückseitige Lagerdeckel 19 besteht im wesentlichen aus einem Gehäusering 27, in dem eine kreisrunde Gehäusewanne 28 angeordnet ist. Die Gehäusewanne 28 weist zentriert den B-seitigen Lagersitz 29 des Motors 18 auf, so dass der Lagerdeckel 19 zugleich als rückseitiges Lagerschild dient. In der Gehäusewanne 28 ist ein die Motorelektronik 20 enthaltendes Elektronikmodul eingelassen oder mittels Wärmeleitkleber mit ihr verbunden, vgl. FIG 5. Das Elektronikmodul umfasst unter anderem eine im einzelnen nicht abgebildete Platine und eine Drossel, Leistungstransistoren, einen Strommesswiderstand und Elektrolytkondensatoren. Die Platine ist dabei gekapselt und insbesondere von einem Deckel 30 abgedeckt, an dessen Rand drei Phasenkontakte 31 freiliegen, vgl. FIG 5. Die Kapselung dient zum einen dazu, die eingeschlossene Motorelektronik 20 zu schützen. Darüber hinaus sorgt die Kapselung dafür, dass die durch die Elektronik erzeugte Verlustwärme nicht in andere Bereiche des Elektromotors 18 abgeleitet, sondern direkt vor Ort an das rückseitige Gehäuseteil 19 bzw. den Deckel 30 abgegebene und von dort durch die verschiedenen Kühlluftströme mitgenommen werden kann. Sämtliche Elektronikkomponenten sind zu diesem Zweck wärmeleitend mit der Gehäusewanne 28 verbunden.

Der fest mit dem Läufer 2 verbundene und sich daher mit dem Läufer 2 mitbewegende Lüfter 15 verstärkt durch Erzeugung eines Unterdrucks die ohnehin vorhandene Luftströmung durch das Motorinnere. Darüber hinaus unterstützt der Lüfter 15 eine Strömung von Kühlluft durch den Läufer 2, der hierfür eine entsprechende Öffnung 11 aufweist, nachdem die Kühlluft zuvor bereits an der Motorelektronik 20 vorbeigeführt und dort Abwärme direkt aufgenommen hat.

An dem Übergang von der Gehäusewanne 28 zu dem Gehäusering 27 weist die Gehäusewanne 28 in Strömungsrichtung 26 verlaufende Durchbrüche auf derart, dass radial verlaufende freistehende Kühlrippen 33 entstehen, die zwischen sich Lufteintrittsöffnungen 32 bilden. Die Kühlrippen 33 dienen zugleich als Wärmeleiter zur Ableitung der Verlustwärme der Motorelektronik 20 in den Gehäusering 27. Die Lufteintrittsöffnungen 32 dienen zum Eintritt von Kühlluft in den Motorinnenraum 17, so dass die im Motorinneren angeordneten Bauteile direkt Abwärme an die Kühlluft abgeben können. Am Gehäusering 27 sind Montageflächen aufweisende Flansche 34 mit Bohrungen 35 zur Ausbildung von Schraubverbindungen angebracht. Über diese Schraubverbindungen wird der Lagerdeckel 19 mit dem abtriebsseitigen Gehäusedeckel 21 verbunden, der entsprechende Flansche 34' aufweist.

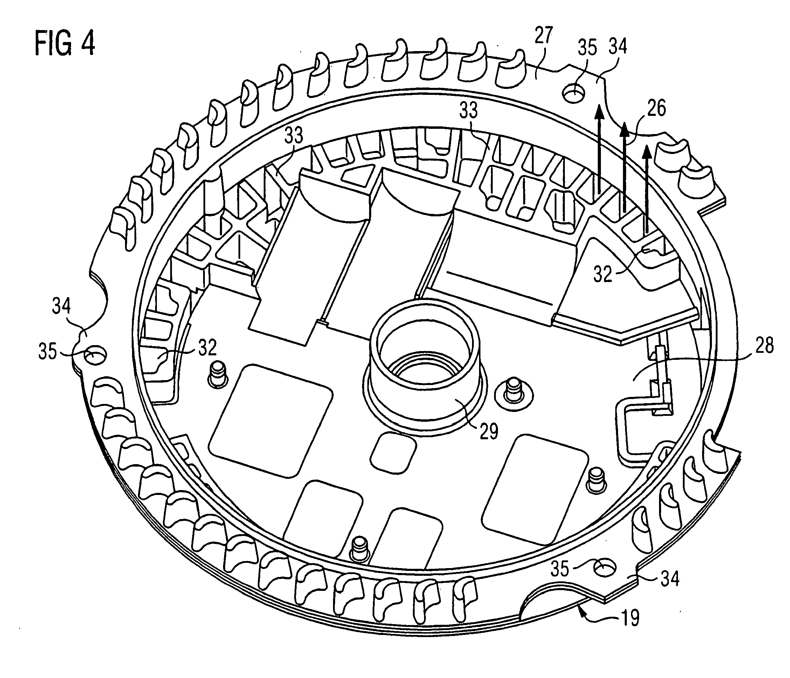

Bedingt durch den allgemeinen Druckunterschied zwischen der Rückseite 25 und der Vorderseite 24 des Elektromotors 18 aufgrund der Drehung des Kühlerlüfters und unterstützt durch die Drehung des Läufers 2 in Drehrichtung 36 erfolgt also eine Luftzufuhr von außen in das Innere des Motors 18 durch Lufteintrittsöffnungen 32 im rückwärtigen Lagerschild 19, vgl. FIG 4. Die Lufteintrittsöffnungen 32 sind dabei in den äußeren, also vom Mittelpunkt des rückwärtigen Lagerschildes 19 am weitesten entfernt angeordneten Bereichen des Lagerschildes 19 angeordnet. Im Vergleich zu Lufteintrittsöffnungen bei herkömmlichen Motoren sind die Lufteintrittsöffnungen 32 größer, um einen ausreichenden Lufteintritt in den Motorinnenraum 17 zu gewährleisten.

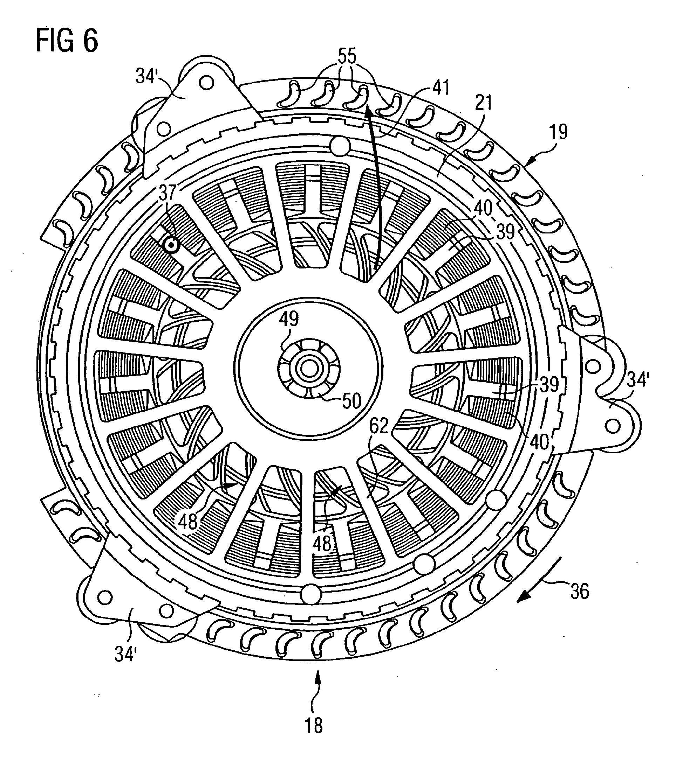

Zur Verdeutlichung des Strömungsverlaufes sind in den Figuren die Luftströmungswege am Läufer 2 und durch den Läufer 2 hindurch mit Pfeilen dargestellt. Der Kühlluftstrom tritt zunächst durch die Lufteintrittsöffnungen 32 in den Motorinnenraum 17 ein. Nach dem Eintritt in den Motorinnenraum 17 durchströmt die Kühlluft auf einem ersten Strömungsweg 37 den Ständer 38, vgl. FIG 7. Hierfür ist eine Einzelzahnbewicklung der voneinander beabstandeten Ständerzähne vorgesehen. Der Kühlluftstrom wird durch die Nutenschlitze 39 hindurch und direkt an den Wicklungen 40 vorbeigeführt und nimmt die Abwärme des Ständerpaketes auf, vgl. auch FIG 6, wo die auf dem Kühlluftweg 37 austretenden Luft zwischen den Wicklungen 40 hindurch und aus der Zeicheneben heraus auf den Betrachter zu strömt. Besonders vorteilhaft ist es, wenn die Lage der Lufteintrittsöffnungen 32 als Luftleitöffnungen auf die Lage der Ständerzähne so abgestimmt ist, dass der Kühlluftstrom auf direktem Weg zu den Kupferwicklungen der Ständerzähne gelangt.

Zum anderen erfolgt ein Durchströmen des Läufers 2 auf einem zweiten Strömungsweg 41 dergestalt, dass die Kühlluft zunächst an der im rückseitigen Gehäusedeckel integrierten Motorelektronik 20 vorbeistreicht in Richtung Lager 29 bzw. Läuferwelle 13 und dann den Läufer 2 durch die Öffnung 11 durchströmt, vgl. FIG 7. Mit anderen Worten strömt die eintretende Luft von außen nach innen hin zu der Öffnung 11 im Läufer 2 und durchströmt den Läufer 2, vgl. FIG 1. Durch die Anordnung der Lufteintrittsöffnungen 32 im Lagerdeckel wird im Betrieb eine thermisch isolierende Luftschicht zwischen dem Deckel 30 der Motorelektronik 20 und dem Läufer 2 aufgebaut. Diese bewirkt u.a., dass ein Übergang von Abwärme von dem Ständer 38 auf die Motorelektronik 20 verhindert oder zumindest stark verringert wird. Zugleich erfolgt durch die Luftströmung eine Aufnahme und Abfuhr der Abwärme von der Motorelektronik 20.

An der Vorderseite 9 des Läufers 2 tritt die Luft durch eine Vielzahl von Austrittsöffnungen 42 aus dem Läufer 2 aus, vgl. FIG 2. Die Austrittsöffnungen 42 erstrecken sich als Verlängerung der inneren Mantelfläche 43 des Läufers 2 in Richtung Läufervorderseite 9. Sie ergeben sich aus einer Art umlaufenden Luftaustrittsschlitz, der durch Luftleitstege 44 in einzelne Austrittsöffnungen 42 unterteilt ist. Die Luftleitstege 44 sind an der Unterseite einer mit dem Befestigungselement 12 verbundenen Lüfternabe 45 angeordnet. Die Luftleitstege 44 setzen sich an der Vorderseite 9 des Läufers 2 fort und bilden die einzelnen Lüfterelemente 46 des Lüfterrades voneinander, die sich von der Lüfternabe 45 hin zum äußeren Umfang 4 des Läufers 2 erstrecken. Die Lüfterelemente 46 sind dabei als rückwärts gekrümmte Schaufeln ausgebildet.

Die durch den Läufer 2 hindurchströmende Luft tritt aus den Luftaustrittsöffnungen 42 aus und wird in den Lüfterelementen 46 radial nach außen gelenkt. Die Lüfterelemente 46 sind an ihren Außenenden in Axialrichtung 6 gekrümmt, so dass jedes Lüfterelement 46 eine Art integriertes Umlenkelement 47 aufweist. Mit Hilfe der Umlenkelemente 47 wird die Kühlluft, welche die Lüfterelemente 46 radial durchströmt, beim Verlassen des Lüfterelements 46 mehr oder weniger in Axialrichtung 6 umgelenkt. Die Umlenkung erfolgt jedenfalls derart, dass die Kühlluft den Lüfter 15 nicht ausschließlich in radialer Richtung verlässt. Mit anderen Worten wird die Kühlluft nach dem Verlassen des Läufers 2 von dem Lüfter 15 mitgenommen und in axiale Richtung 6 umgelenkt aus dem abtriebsseitigen Gehäusedeckel 21 heraus abgegeben. Der abtriebsseitige Gehäusedeckel 21 weist zu diesem Zweck eine Vielzahl von Durchtrittsöffnungen 48 auf, vgl. FIG 6. Die Durchtrittsöffnungen 48 sind sternförmig um das A-seitige Lager 49 herum angeordnet und bilden einen kreisförmigen Austrittsbereich, der oberhalb der Nutenschlitze 39 und der Lüfterelemente 46 angeordnet ist. Die die Durchtrittsöffnungen 48 voneinander trennenden Tragstege 62 sind zu den Nutenschlitzen 39 derart versetzt angeordnet, dass sie mittig zu den Wicklungen 40 verlaufen. Dadurch verringert sich der Strömungswiderstand gegen die aus den Wicklungen 40 ausströmende Kühlluft 37.

Die Umlenkung der aus dem Läufer 2 austretenden Kühlluft in Axialrichtung 6 bewirkt, dass die beiden Luftströmungen entlang der Strömungswege 37, 41 durch die Ständerwicklungen einerseits und durch den Läufer 2 andererseits nicht aufeinander treffen. Dies würde zu Verwirbelungen der Luftströme und damit zu einer Verschlechterung der Kühlleistung führen. In dem A-seitigen Lager 49 ist die Läuferwelle 13 ebenso wie in dem B-seitigen Lager 29 mit einem Kugellager 50 gelagert. Der Gehäusedeckel 21 besteht dabei im Wesentlichen aus einer der Gehäusewanne 28 des Lagerdeckels 19 gegenüberliegenden Deckeloberseite 51 und einer in axialer Richtung 6 verlaufenden umlaufenden seitlichen Gehäusedeckelwand 52, vgl. FIG 7.

Durch die Durchtrittsöffnungen 48 treten die von den Nutenschlitzen 39 und aus dem Lüfter 15 des Läufers 2 kommenden Kühlluftströme aus dem Motorinnenraum 17 aus und streifen in Strömungsrichtung über die Oberseite 51 des aufgeheizten Gehäusedeckels 21 hinweg, wobei sie Abwärme aufnehmen.

Das abtriebsseitige Gehäusedeckel 21 wird topf- oder glockenartig von der Lüfternabe 22 des Kühlerlüfters umfasst, so dass der aus den Durchtrittsöffnungen 48 austretende Kühlluftstrom über die abtriebsseitige Deckeloberseite 51 strömt und durch einen randseitig umlaufenden Luftaustrittsspalt 53 zwischen Motorgehäuse und Lüfternabe 22 austritt. Lüfternabeninnengeometrie und Motorgehäuseteile sind dabei in ihrer Formgebung derart aufeinander abgestimmt, dass ein verhältnismäßig schmaler Luftaustrittsspalt 53 zwischen Motorgehäuse und Lüfternabe 22 mit konstanter Breite entsteht, so dass eine hohe Geschwindigkeit der durchtretenden Kühlluft erzielt werden kann.

Durch die Drehung der Lüfternabe 22 wird der Kühlluftstrom beim Austreten aus dem verhältnismäßig schmalen Luftaustrittspalt 53 mit anderen Worten zusätzlich beschleunigt, wodurch der Druckunterschied erhöht und damit die Kühlungswirkung weiter verbessert wird. Die Lüfternabeninnenseite ist mit Versteifungsrippen 54 versehen derart, dass diese als Lüfterelemente dienen, eine Art Radiallüfter ausbilden und den Kühlluftstrom nochmals beschleunigen, vgl. FIG 7. Anders ausgedrückt wird durch die Form der Versteifungsrippen 54 der Luftstrom durch den Motorinnenraum 17 erhöht und damit die Kühlungswirkung verstärkt.

Die aus dem Luftaustrittsspalt 53 austretende Kühlluft trifft auf am Gehäusering 27 des rückseitigen Lagerdeckels 19 angeordnete, drehrichtungsabhängig ausgebildete Luftleitschaufeln 55, die ringförmig am Umfang des rückseitigen Lagerdeckels 19 angeordnet sind, vgl. FIG 6. Die Luftleitschaufeln 55 sind ebenfalls mit der Motorelektronik 20 wärmeleitend verbunden, so dass sie zur Abführung der insbesondere von der Motorelektronik 20 erzeugten Abwärme aus dem Motorinnenraum 17 nach außen dienen. Vorteilhafterweise ist die Lage dieser Kühlelemente auf die Lage des Luftaustrittsspaltes 53 derart abgestimmt, dass der durch den Luftaustrittsspalt 53 austretende Kühlluftstrom auf direktem Weg zu den Luftleitschaufeln 55 gelangt. Da der Läufer 2 einen integrierten Lüfter 15 aufweist, ist seine Drehrichtung festgelegt. Durch eine entsprechend dieser Drehrichtung gewählte, insbesondere sichelförmige Ausgestaltung der Luftleitschaufeln 55 wird eine gerichtete Strömung der abgegebenen Kühlluft von dem Motor 18 weg unterstützt.

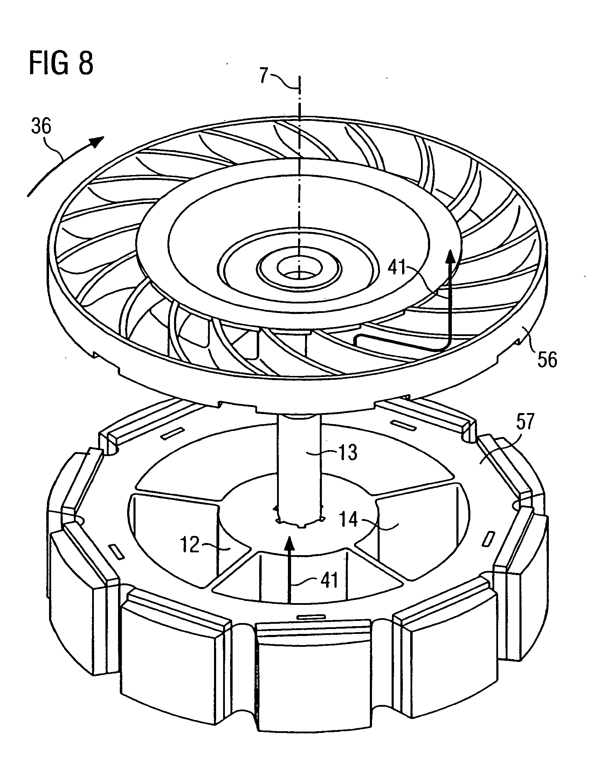

In FIG 8 ist eine Ausführungsform der Erfindung angegeben, bei der ebenfalls ein Radial-Axial-Lüfter 56 für ein Zusammenwirken mit einem offenen Innenläufer 57 vorgesehen ist. Die durch den Läufer 57 hindurchtretende Kühlluft wird von dem Lüfter 56 radial beschleunigt und dann in axialer Richtung abgegeben. Jedoch ist der Lüfter 56 als separates Bauteil ausgeführt, das auf die Läuferwelle 13 aufgesteckt und mit nicht im Detail dargestellten Befestigungselementen mit dem Läufer 57 verbunden wird.

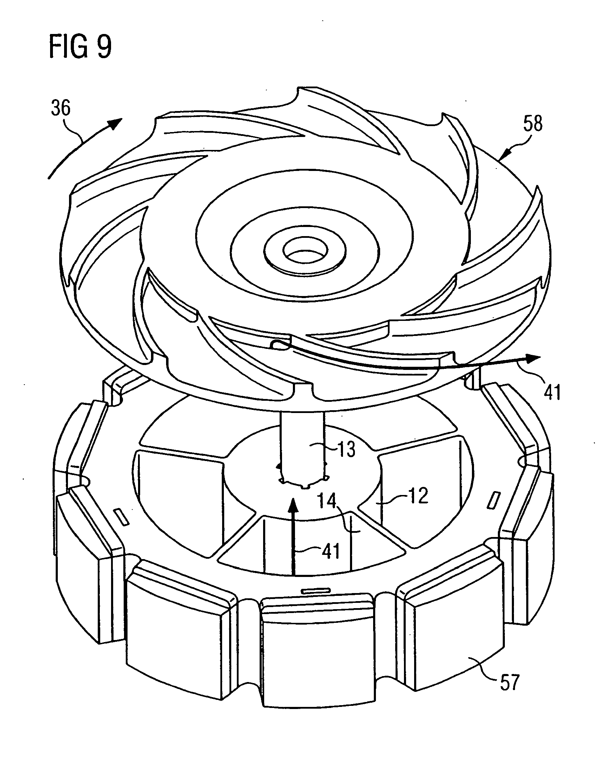

Ebenfalls einen separaten Lüfter zeigt FIG 9. Bei dem Lüfter handelt es sich um einen reinen Radiallüfter 58, welcher die durch den Läufer 57 hindurchtretende Kühlluft radial an die Umgebung abgibt.

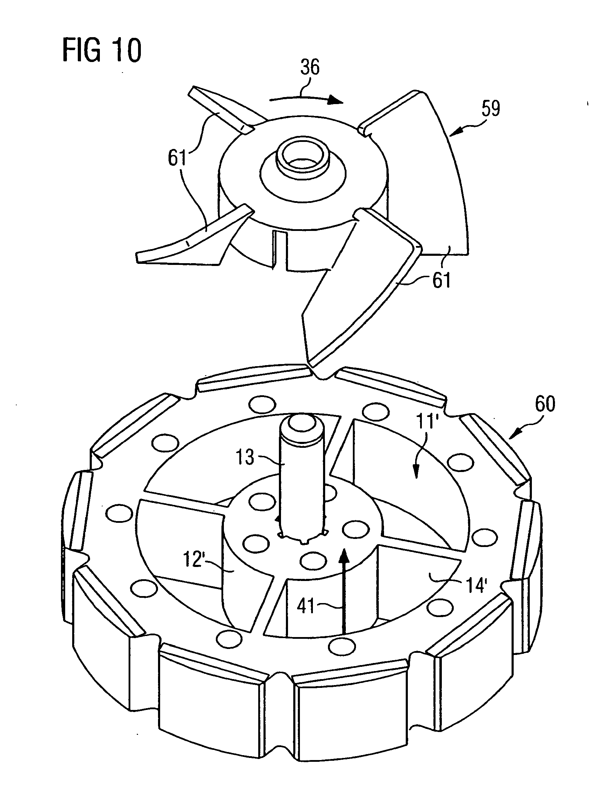

In FIG 10 ist schließlich eine weitere Ausführungsform der Erfindung abgebildet, bei der ein separater Lüfter in Form eines Axiallüfters 59 vorgesehen ist, der in die zentrale Öffnung eines Innenläufers 60 eingesetzt wird. Die Verbindungselemente 14' zwischen dem Läufer 60 und dem zentralen Befestigungselement 12' in der Öffnung 11' sind derart vorgesehen, dass sich vier offene Abschnitte ergeben, in denen die einzelnen Lüfterelemente 61 im montierten Zustand angeordnet sind. Dieses Ausführungsbeispiel zeichnet sich durch eine besonders flache Bauform aus, da der Lüfter 59 im Inneren des Läufers 60 untergebracht ist.

## Patentansprüche

1. Elektrische Maschine (18)
- mit einem permanentmagneterregten Innenläufer (2) und einem Ständer (38),
- mit Magneten (3) in einer Anordnung auf der Umfangslinie des Innenläufers (2) derart, dass sich ein magnetisch nicht wirksamer Bereich (10) um das Zentrum des Innenläufers (2) ergibt,
- mit wenigstens einer im wesentlichen in Axialrichtung (6) verlaufende Öffnung (11) in dem magnetisch nicht wirksamen Bereich (10) des Innenläufers (2) zur Ausbildung eines Luftströmungsweges (41) durch den Innenläufer (2), und
- mit einem sich mit dem Innenläufer (2) mitbewegenden Lüfter (15, 56, 58, 59) zur Ausbildung eines Luftstromes durch die Öffnung (11) des Innenläufers (2),
**gekennzeichnet durch** ein Maschinenrückgehäuseteil (19) mit wenigstens einer Lufteintrittsöffnung (32), wobei die Lufteintrittsöffnung (32) zu der Öffnung (11) des Innenläufers (2) derart angeordnet ist, dass der Luftstrom von der Lufteintrittsöffnung (32) in Richtung der Öffnung (11) an einer Elektronikkomponente (20) entlanggeführt wird.

2. Elektrische Maschine (18) nach Anspruch 1, **dadurch gekennzeichnet, dass** die wenigstens eine Öffnung (11) derart ausgebildet ist, dass der Innenläufer (2) im wesentlichen die Form eines Hohlzylinders aufweist, wobei ein zentrales Befestigungselement (12) für eine Läuferwelle (13) vorgesehen ist, das mit dem Innenläufer (2) mit Hilfe von speichenartig in der Öffnung (11) angeordneten Streben (14) verbunden ist.

3. Elektrische Maschine (18) nach Anspruch 1 oder 2, **dadurch gekennzeichnet, dass** der Lüfter (15) und der Innenläufer (2) eine Baueinheit bilden.

4. Elektrische Maschine (18) nach Anspruch 3, **dadurch gekennzeichnet, dass** der Lüfter (15) Bestandteil einer Kunststoff-Umspritzung des Innenläufers (2) ist.

5. Elektrische Maschine (18) nach Anspruch 1, **gekennzeichnet durch** einen zweiten, an dem Wicklungen des Ständers (38) entlang führenden Luftströmungsweg (37).

6. Elektrische Maschine (18) nach einem der Ansprüche 1 bis 5, **dadurch gekennzeichnet, dass** der Lüfter als Radial-Axial-Lüfter (15, 56) oder als Radiallüfter (58) oder als Axiallüfter (59) ausgebildet ist.

7. Elektrische Maschine (18) nach einem der Ansprüche 1 bis 6, **dadurch gekennzeichnet, dass** die Elektronikkomponente (20) gekapselt ist und mit dem Maschinenrückgehäuseteil (19) derart verbunden ist, dass die durch die Elektronikkomponente (20) erzeugte Verlustwärme direkt an das Maschinenrückgehäuseteil (19) abgegeben wird.

8. Gebläseeinheit mit einer elektrischen Maschine (18) nach einem der Ansprüche 1 bis 7 und mit einem von der Maschine angetriebenen Lüfter, insbesondere Kühlerlüfter für ein Kraftfahrzeug.

## Claims

1. Electric machine (18)
- comprising an internal rotor (2) excited by permanent magnets and a stator (38),
- comprising magnets (3) in an arrangement on the circumferential line of the internal rotor (2) such that a magnetically non-effective zone (10) is created around the centre of the internal rotor (2),
- comprising at least one opening (11) extending substantially in the axial direction (6) in the magnetically non-effective zone (10) of the internal rotor (2) for forming an air flow path (41) through the internal rotor (2), and
- comprising a fan (15, 56, 58, 59) moving with the internal rotor (2) for forming an air flow through the opening (11) of the internal rotor (2),
**characterised by** a rear housing part of the machine (19) with at least one air inlet opening (32), the air inlet opening (32) being arranged at the opening (11) of the internal rotor (2), such that the air flow from the air inlet opening (32) is guided along in the direction of the opening (11) to an electronic component (20).

2. Electric machine (18) according to claim 1, **characterised in that** the at least one opening (11) is configured such that the internal rotor (2) has substantially the shape of a hollow cylinder, a central fastening element (12) being provided for a rotor shaft (13) which is connected to the internal rotor (2) by means of struts (14) arranged in the manner of spokes in the opening (11).

3. Electric machine (18) according to claim 1 or 2, **characterised in that** the fan (15) and the internal rotor (2) form an assembly unit.

4. Electric machine (18) according to claim 3, **characterised in that the** fan (15) is a component of a plastic overmoulding of the internal rotor (2).

5. Electric machine (18) according to claim 1, **characterised by** a second air flow path (37) guided along the windings of the stator (38).

6. Electric machine (18) according to one of claims 1 to 5, **characterised in that** the fan is configured as a radial axial fan (15, 56) or as a radial fan (58) or as an axial fan (59).

7. Electric machine (18) according to one of claims 1 to 6, **characterised in that** the electronic component (20) is encapsulated and connected to the rear housing part of the machine (19) such that the dissipated heat generated by the electronic component (20) is discharged directly to the rear housing part of the machine (19).

8. Fan unit comprising an electric machine (18) according to one of claims 1 to 7, and comprising a fan driven by the machine, in particular cooling fan for a motor vehicle.

## Revendications

1. Machine électrique (18) comprenant :
- un rotor intérieur (2) excité par aimant permanent, et un stator (38),
- des aimants (3), dans une disposition sur la ligne périphérique du rotor intérieur (2) telle qu'il se forme une région non magnétiquement active (10) autour du centre du rotor intérieur (2),
- au moins une ouverture (11) s'étendant sensiblement selon la direction axiale (6), dans la région non magnétiquement active (10) du rotor intérieur (2), destinée à former un passage de flux d'air (41) à travers le rotor intérieur (2), et
- un ventilateur (15, 56, 58, 59) en mouvement avec le rotor intérieur (2), destiné à former un flux d'air à travers l'ouverture (11) du rotor intérieur (2),
**caractérisée par** une partie dorsale de carcasse (19) de la machine avec au moins une ouverture d'entrée d'air (32), l'ouverture d'entrée d'air (32) étant disposée relativement à l'ouverture (11) du rotor intérieur (2) de telle manière que le flux d'air provenant de l'ouverture d'entrée d'air (32) et se dirigeant vers l'ouverture (11) passe le long d'un composant électronique (20).

2. Machine électrique (18) selon la revendication 1, **caractérisée en ce que** l'au moins une ouverture (11) est formée de manière que le rotor intérieur (2) présente sensiblement la forme d'un cylindre creux, un élément de fixation étant prévu pour un arbre (13) du rotor, l'élément de fixation central (12) étant relié au rotor intérieur (2) à l'aide d'étais (14) disposés comme des rayons dans l'ouverture (11).

3. Machine électrique (18) selon la revendication 1 ou 2, **caractérisée en ce que** le ventilateur (15) et le rotor intérieur (2) forment un élément.

4. Machine électrique (18) selon la revendication 3, **caractérisée en ce que** le ventilateur (15) est une partie constitutive d'un surmoulage en matière plastique du rotor intérieur (2).

5. Machine électrique (18) selon la revendication 1, **caractérisée par** un second passage de flux d'air (37) s'écoulant le long des enroulements du stator (38).

6. Machine électrique (18) selon l'une quelconque des revendications 1 à 5, **caractérisée en ce que** le ventilateur est formé d'un ventilateur radial-axial (15, 56), ou d'un ventilateur radial (58), ou encore d'un ventilateur axial (59).

7. Machine électrique (18) selon l'une quelconque des revendications 1 à 6, **caractérisée en ce que** le composant électronique (20) est encapsulé et relié à la partie dorsale de carcasse (19) de la machine de telle manière que la chaleur perdue produite par le composant électronique (20) est cédée directement à la partie dorsale de carcasse (19) de la machine.

8. Ensemble ventilateur comprenant une machine électrique (18) selon l'une quelconque des revendications 1 à 7, et un ventilateur entraîné par la machine, en particulier un ventilateur de radiateur pour un véhicule automobile.
